(19) Europäisches Patentamt / European Patent Office / Office européen des brevets

(11) **EP 4 401 171 A1**

(12) **EUROPEAN PATENT APPLICATION**

(43) Date of publication:
**17.07.2024 Bulletin 2024/29**

(21) Application number: **24150745.8**

(22) Date of filing: **08.01.2024**

(51) International Patent Classification (IPC):
**H01M 4/58** (2010.01)   **H01M 10/054** (2010.01)

(52) Cooperative Patent Classification (CPC):
**C01B 32/914; C01B 32/921; H01M 4/58; H01M 10/054; C01P 2002/72**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2023 JP 2023003252**

(71) Applicants:
• **TOYOTA JIDOSHA KABUSHIKI KAISHA
Toyota-shi, Aichi-ken, 471-8571 (JP)**

• **Tokyo Institute of Technology
Tokyo 152-8550 (JP)**

(72) Inventors:
• **TOJIGAMORI, Takeshi
Toyota-shi, 471-8571 (JP)**
• **MATSUI, Naoki
Tokyo, 152-8550 (JP)**

(74) Representative: **D Young & Co LLP
3 Noble Street
London EC2V 7BQ (GB)**

(54) **NEGATIVE ELECTRODE ACTIVE MATERIAL FOR FLUORIDE ION BATTERY, NEGATIVE ELECTRODE ACTIVE MATERIAL LAYER FOR FLUORIDE ION BATTERY, FLUORIDE ION BATTERY, AND METHOD FOR PRODUCING NEGATIVE ELECTRODE ACTIVE MATERIAL FOR FLUORIDE ION BATTERY**

(57)   The present disclosure provides a negative electrode active material for a fluoride ion battery capable of realizing high charge and discharge capacity, a fluoride ion battery having such a negative electrode active material, and a method for producing such a negative electrode active material for a fluoride ion battery. The negative electrode active material for a fluoride ion battery of the present disclosure has a transition metal carbide having a non-layered structure. The method of the present disclosure for producing a negative electrode active material for a fluoride ion battery comprises applying mechanical impact to a transition metal carbide having a layered structure to convert the transition metal carbide to a transition metal carbide having a non-layered structure.

FIG. 1

**Description**

BACKGROUND OF THE DISCLOSURE

The present disclosure relates to a negative electrode active material for a fluoride ion battery, a negative electrode active material layer for a fluoride ion battery, a fluoride ion battery, and a method for producing a negative electrode active material for a fluoride ion battery.

Various materials have been proposed as negative electrode active materials (anode active materials) for fluoride ion batteries.

For example, Patent Literature 1 discloses an anode comprising a layered material selected from the group consisting of hard carbon, nitrogen-doped graphite, boron-doped graphite, $TiS_2$, $MoS_2$, $TiSe_2$, $MoSe_2$, $VS_2$, $VSe_2$, electronides of alkaline earth metal nitrides, electronides of metal carbides, and combinations thereof.

Patent Document 2 discloses a negative electrode and a positive electrode active material containing a transition metal oxide having a rock salt crystal structure.

Patent Document 3 discloses an active material for a fluoride ion secondary battery containing a metal composite fluoride, wherein the metal composite fluoride contains at least one metal selected from the group consisting of an alkali metal, an alkaline earth metal, scandium, yttrium, and a lanthanoid; a first transition metal; a second transition metal different from the first transition metal; and fluorine.

[Patent Document 1] JP2020-534652
[Patent Document 2] JP2020-194697
[Patent Document 3] JP2019-204775

BRIEF SUMMARY OF THE DISCLOSURE

Various materials have been proposed as negative electrode active materials for fluoride ion batteries, but new negative electrode active materials for fluoride ion batteries having improved characteristics are required.

An object of the present disclosure is to provide a negative electrode active material for a fluoride ion battery capable of realizing high charge and discharge capacity, a method for producing such a negative electrode active material for a fluoride ion battery, and a fluoride ion battery having such a negative electrode active material.

[Means for solving the problem]

The present inventors have found that the above problem can be achieved by the followings:

<Embodiment 1>

A negative electrode active material for a fluoride ion battery, comprising a transition metal carbide having a non-layered structure.

<Embodiment 2>

The negative electrode active material according to Embodiment 1, wherein the transition metal carbide satisfies the following conditions:

$$A/B \leqq 0.05$$

where

A is the maximum peak intensity between 10 degree to 20 degree in X-ray diffraction analysis, and
B is the maximum peak intensity between 25 degree to 35 degree in X-ray diffraction analysis.

<Embodiment 3>

The negative electrode active material according to Embodiment 1, wherein the transition metal carbide is selected from the group consisting of scandium carbide, yttrium carbide, dysprosium carbide, and titanium carbide.

<Embodiment 4>

The negative electrode active material according to Embodiment 1, wherein the transition metal carbide is represented by the following formula:

$$MxC(1-x)$$

where 0.25<x<0.78.

<Embodiment 5>

A negative electrode active material layer for a fluoride ion battery, comprising the negative electrode active material according to any one of aspects 1 to 4.

<Embodiment 6>

The negative electrode active material layer according to Embodiment 5, comprising the negative electrode active material, a solid electrolyte, and a conductive agent.

<Embodiment 7>

A fluoride ion battery comprising the negative electrode active material layer according to Embodiment 5.

<Embodiment 8>

The method for producing a negative electrode active material according to any one of Embodiments 1 to 4, comprising applying a mechanical impact to a transition metal carbide having a layered structure to convert the transition metal carbide into a transition metal carbide having a non-layered structure.

<Embodiment 9>

The method according to embodiment 8, wherein the transition metal carbide having the layered structure satisfies the following conditions:

$$0.05 \leqq A/B$$

where

   A is the maximum peak intensity between 10 degree to 20 degree in X-ray diffraction analysis, and
   B is the maximum peak intensity beteen 25 degree to 35 degree in X-ray diffraction analysis.

<Embodiment 10>

The method of embodiment 8, wherein the mechanical impact is applied by a ball mill.

[Effect of the Invention]

According to the present disclosure, it is possible to provide a negative electrode active material for a fluoride ion battery capable of realizing high charge and discharge capacity, a method for producing such a negative electrode active material for a fluoride ion battery, and a fluoride ion battery having such a negative electrode active material.

BRIEF DESCRIPTION OF THE DRAWING

   [Fig. 1] FIG. 1 is a schematic diagram of a fluoride ion battery of the present disclosure.

[Fig. 2] FIG. 2 is a graph showing XRD result of the negative electrode active material ($Y_{0.67}C_{0.33}$ (layered structure)) used in the fluoride-ion battery of Reference Example 1.

[Fig. 3] FIG. 3 is a graph showing XRD result of the negative electrode active material ($Y_{0.67}C_{0.33}$ (non-layered structure)) used in the fluoride-ion battery of Example 1.

[Fig. 4] FIG. 4 is a graph showing XRD result of the negative electrode active material ($Dy_{0.67}C_{0.33}$ (non-layered structure)) used in the fluoride-ion battery of Example 2.

[Fig. 5] FIG. 5 is a graph showing XRD result of the negative electrode active material ($Sc_{0.67}C_{0.33}$ (non-layered structure)) used in the fluoride-ion battery of Example 3.

[Fig. 6] FIG. 6 is a graph showing a charge-discharge curve of the fluoride ion battery of Reference Example 1.

[Fig. 7] FIG. 7 is a graph showing a charge-discharge curve of the fluoride ion battery of Example 1.

[Fig. 8] FIG. 8 is a graph showing a charge-discharge curve of the fluoride ion battery of Example 2.

[Fig. 9] FIG. 9 is a graph showing a charge-discharge curve of the fluoride ion battery of Example 3.

[Fig. 10] FIG. 10 is a graph showing a charge-discharge curve of the fluoride ion battery of Example 4.

## DETAILED DESCRIPTION OF THE DISCLOSURE

Hereinafter, embodiments of the present disclosure will be described in detail. It should be noted that the present disclosure is not limited to the following embodiments, and various modifications can be made within the scope of the present disclosure.

<<Negative Electrode Active Material for Fluoride Ion Battery>>

The negative electrode active material for a fluoride ion battery of the present disclosure comprises a transition metal carbide having a non-layered structure, in particular a transition metal carbide having a rock salt structure.

In a lithium ion battery, a metal oxide having a layered rock salt structure, for example lithium cobaltate, lithium cobalt-nickel-manganate, or the like is used as a positive electrode active material. pecifically, in a lithium ion battery, lithium ions are inserted and desorbed between layers of layered structures of these compounds, such that a battery reaction is performed.

Similarly, it has been theoretically shown that in a fluoride ion battery, in order to carry out a battery reaction, a metal carbide having a layered rock salt structure can be used as a negative electrode active material, such that fluorine ions can be inserted and desorbed between layers of the layered structure of these compounds.

However, the inventors of the present disclosure have found that when such a metal carbide having a layered rock salt structure is used as a negative electrode active material of a fluoride ion battery, that is, when a metal carbide having a remarkable XRD peak at about 15 degree derived from a layered structure is used as a negative electrode active material of a fluoride ion battery, a substantial battery reaction does not occur. Without being limited to any theories, the inventors of the present disclosure considered that the reason why a substantial battery reaction thus does not occur is that the diffusion process of fluoride ions into the metal carbide having a layered rock salt structure is very slow.

On the other hand, the inventors of the present disclosure has conceived that the layered structure of the transition metal carbide is distorted to provide a random crystal structure, so as to form vacancies in which fluorine ions can diffuse, and thereby causing three-dimensional diffusion, rather than two-dimensional diffusion which has been performed in the layered structure.

In the context of the present disclosure, the fact that the transition metal carbide has a non-layered structure means that, in XRD diffraction analysis of the transition metal carbide, the peak derived from the layered structure is small, in particular the transition metal carbide does not have a remarkable peak derived from the layered structure. Specifically, for example, with respect to the present disclosure, a transition metal carbide having a non-layered structure means that the transition metal carbide satisfies the following conditions:

$$A/B \leq 0.05, \text{ particularly } 0.03, \text{ more particularly } 0.01$$

particularly 0.03, more particularly 0.01
where

A is the maximum peak intensity between 10 degree to 20 degree in X-ray diffraction analysis, and
B is the maximum peak intensity between 25 degree to 35 degree in X-ray diffraction analysis.

The maximum peak between 10 degree to 20 degree in the X-ray diffraction analysis represents a peak derived from the layered structure, and the maximum peak between 25 degree to 35 degree in the X-ray diffraction analysis represents a peak derived from the rock salt structure. In the present disclosure, XRD measurement can be performed using, for example, a mini-flex (manufactured by Rigaku Co., Ltd.) of a Cu-K$\alpha$ radiation source, and the negative electrode active material layer mixture can be measured at a measurement range of 10 degree to 80 degree, a scanning speed of 2 degree/min, and a measurement interval of 0.02 degree in an argon (Ar) atmosphere.

In the present disclosure, transition metal carbides may be, for example, group 3 element carbides, zirconium carbides, niobium carbides, molybdenum carbides, titanium carbides, vanadium carbides, or tantalum carbides. Here, the Group 3 element carbide may be selected from the group consisting of dysprosium carbide, scandium carbide, samarium carbide, gadolinium carbide, terbium carbide, holmium carbide, europium carbide, thulium carbide, ytterbium carbide, lutetium carbide, and erbium carbide.

In the present disclosure, the transition metal carbide especially may be selected from the group consisting of scandium carbide, yttrium carbide, dysprosium carbide, and titanium carbide.

In the present disclosure, the transition metal carbide may be represented by the following formula:

$$M_xC_{(1-x)}$$

wherein M represents a transition metal element, and $0.25 < x < 0.78$, particularly $0.50 < x < 0.70$, more particularly $0.60 < x < 0.70$, even more particularly $x =$ about 0.67.

In the transition-metal carbide represented by $M_xC_{(1-x)}$, when x is in the above-described range, a rock-salt structure has a defect at a carbon (C) site, so that pores capable of diffusing fluoride ions are likely to be formed.

The negative electrode active material in the fluoride ion battery releases fluoride ions (fluorine ions) at the time of charging and receives fluoride ions at the time of discharging. In other words, the negative electrode active material for a fluoride ion battery of the present disclosure may further contain fluorine depending on the state of charge and discharge of the fluoride ion battery.

The shape of the negative electrode active material is not particularly limited, but may be, for example, particulate.

<<nufacturing Method of Negative Electrode Active Material for Fluoride Ion Battery>>

The method of the present disclosure for producing a negative electrode active material for a fluoride ion battery comprises applying a mechanically impact to a transition metal carbide of a layered structure so as to convert the transition metal carbide to a transition metal carbide having a non-layered structure. Thus, in the method of the present disclosure, a transition metal carbide having a layered structure can be converted into a transition metal carbide having a non-layered structure by mechanical impact, thereby obtaining a negative electrode active material for a fluoride ion battery of the present disclosure.

The transition metal carbide having a layered structure used as a raw material in the method of the present disclosure can satisfy the following conditions:
0.05, in particular 0.08, more particularly 0.10<A/B
where

A is the maximum peak intensity between 10 degree to 20 degree in X-ray diffraction analysis, and
B is the maximum peak intensity between 25 degree to 35 degree in X-ray diffraction analysis

For the type and composition of the transition metal carbide having a layered structure used as a raw material in the method of the present disclosure, reference can be made to the description of the negative electrode active material for a fluoride ion battery of the present disclosure.

The method of the present disclosure can be implemented in any device capable of applying mechanical impact of a strength capable of converting a transition metal carbide having a layered structure to a transition metal carbide having a non-layered structure. Thus, for example, this mechanical impact can be applied by a ball mill, in which case, the rotational speed of the ball mill can be adjusted to adjust the intensity of the mechanical impact. The mechanical impact can be applied for a time required to convert the transition metal carbide having a layered structure to a transition metal carbide having the non-layered structure, for example, for a time of 1 hour or more, 3 hours or more, 5 hours or more, or 10 hours or more.

<<Negative Electrode Active Material Layer for Fluoride Ion Battery>>

The negative electrode active material layer for a fluoride ion battery of the present disclosure comprises the negative electrode active material of the present disclosure.

When the fluoride ion battery is a liquid-based fluoride ion battery using a liquid electrolyte, the negative electrode active material layer for a fluoride ion battery of the present disclosure may include the negative electrode active material of the present disclosure and a conductive agent. When the fluoride ion battery is a solid fluoride ion battery using a solid electrolyte, the negative electrode active material layer for a fluoride ion battery of the present disclosure may include the negative electrode active material of the present disclosure, the solid electrolyte, and the conductive agent. The negative electrode active material layer for a fluoride ion battery of the present disclosure may optionally include a binder.

The content of the negative electrode active material in the negative active material electrode layer is preferably larger from the viewpoint of capacity. The ratio of the mass of the negative electrode active material to the mass of the negative electrode active material layer may be 10% by mass to 90% by mass, and is preferably 20% by mass to 80% by mass.

The content of the conductive agent in the negative active material electrode layer is preferably smaller from the viewpoint of capacity, and is preferably larger from the viewpoint of electronic conductivity. The ratio of the mass of the conductive agent to the mass of the negative electrode active material layer may be 1% by mass to 40% by mass, and preferably 2% by mass to 20% by mass.

The content of the solid electrolyte in the negative active material electrode layer is preferably smaller from the viewpoint of capacity, and is preferably larger from the viewpoint of conductivity of fluoride ions. The ratio of the mass of the solid electrolyte to the mass of the negative electrode active material layer may be 5% by mass to 70% by mass, and is preferably 10% by mass to 40% by mass.

Hereinafter, materials constituting the negative electrode active material layer for a fluoride ion battery of the present disclosure will be described.

(Conductive Agent)

The conductive agent is not particularly limited, as long as it has a desired electron conductivity, and examples thereof include a carbon material. Examples of the carbon material include carbon black such as acetylene black, Ketjen black, furnace black, and thermal black; and carbon nanotubes.

(Solid Electrolyte)

The solid electrolyte may be any solid electrolyte that can be used in a fluoride ion battery.

Examples of the solid electrolyte include fluorides of lanthanoid elements such as La and Ce; fluorides of alkali metal elements such as Li, Na, K, Rb, and C; and fluorides of alkaline earth elements such as Ca, Sr, Ba. The solid electrolyte may be a fluoride containing a plurality of kinds of lanthanoid elements, alkali metal elements, and alkaline earth elements.

Specific examples of the solid-state electrolyte include $La_{(1-y)}Ba_yF_{(3-y)}$ ($0 \leq y \leq 1$), $Pb_{(2-y)}Sn_yF_4$ ($0 \leq y \leq 2$), $Ca_{(2-y)}Ba_yF_4$ ($0 \leq y \leq 2$), and $Ce_{(1-y)}Ba_yF_{(3-y)}$ ($0 \leq y \leq 1$). Each y may be greater than 0, 0.3 or greater, 0.5 or greater, or 0.9 or greater, respectively. In addition, y may be smaller than 1, 0.9 or less, 0.5 or less, or 0.3 or less, respectively.

The shape of the solid electrolyte is not particularly limited, but may be, for example, particulate.

(Binder)

The binder is not particularly limited as long as it is chemically and electrically stable, and examples thereof include fluorine-based binders such as polyvinylidene fluoride (PVDF) and polytetrafluoroethylene (PTFE).

«Fluoride Ion Battery»

The fluoride ion battery of the present disclosure has a negative electrode active material layer of the present disclosure.

The fluoride ion battery of the present disclosure may be a liquid-based battery or a solid-state battery, and in particular may be an all-solid-state battery. The fluoride ion battery in the present disclosure may be a primary battery or a secondary battery. The shape of the fluoride ion battery of the present disclosure includes, for example, coin type, pouch type, cylindrical type, and angular type.

When the fluoride ion battery of the present disclosure is a liquid-based fluoride ion battery using a liquid electrolyte, the fluoride ion battery of the present disclosure may include a negative electrode active material layer, a separator layer, and a positive electrode active material layer in this order. In particular, in this case, the fluoride ion battery of the present disclosure may include a negative electrode current collector layer, a negative electrode active material layer, a separator layer, a positive electrode active material layer, and a positive electrode current collector layer in this order.

When the fluoride ion battery of the present disclosure is a solid fluoride ion battery using a solid electrolyte, the fluoride ion battery of the present disclosure may include a negative electrode active material layer, a solid electrolyte layer, and a positive electrode active material layer in this order. In particular, in this case, the fluoride ion battery of the present disclosure may include a negative electrode current collector layer, a negative electrode active material layer, a solid electrolytic layer, a positive electrode active material layer, and a positive electrode current collector layer in this order.

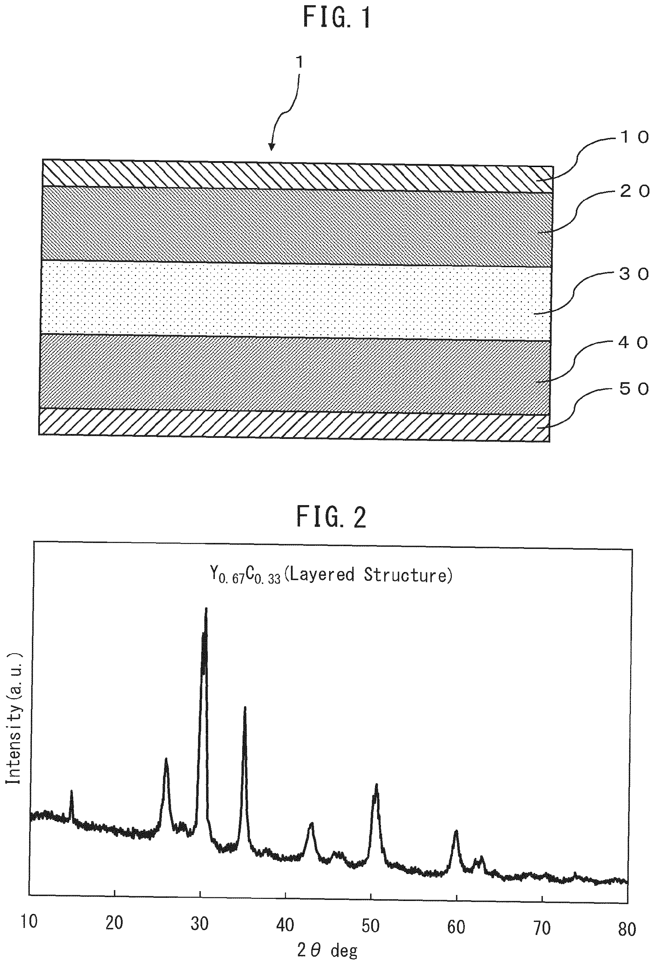

For example, as shown in FIG. 1, the solid fluoride ion battery 100 of the present disclosure has a structure in which the positive electrode current collector layer 10, the positive electrode active material layer 20, the electrolyte layer 30, the negative electrode active material layer 40, and the negative electrode current collector layer 50 are stacked in this order.

The fluoride ion battery of the present disclosure may have a battery case that houses components thereof. The battery case may have any shape capable of accommodating a member of a fluoride ion battery, and a battery case used in a general battery may be employed.

Hereinafter, each layer constituting the fluoride ion battery of the present disclosure will be described.

(Negative electrode current collector layer)

Examples of materials of the negative electrode current collector layers include stainless steel (SUS), copper, nickel, iron, titanium, platinum, and carbon. Examples of the shape of the negative electrode current collector layer include a foil shape, a mesh shape, and a porous shape.

(Negative electrode active material layer)

For the negative electrode active material layer, the above description regarding the negative electrode active material layer of the present disclosure can be referred to.

(Solid electrolyte layer and separator layer)

When the fluoride ion battery of the present disclosure is a liquid-based battery, the fluoride ion battery of the present disclosure may have a separator layer as an electrolyte layer, and the separator layer may hold the electrolyte liquid.

The electrolyte liquid may contain, for example, a fluoride salt and an organic solvent. Examples of the fluoride salt include an inorganic fluoride salt, an organic fluoride salt, and an ionic liquid. Example of inorganic fluoride salt can include XF, where X is Li, Na, K, Rb, or Cs. Examples of the cationic of the organic fluoride salt include alkylammonium cation such as tetramethylammonium cation. The content of the fluoride salt in the electrolyte solution is, for example, preferably 0.1mol% or greater, 40mol% or greater, and preferably 1mol% or greater and 10mol% or less.

The organic solvent of the electrolytic solution is usually a solvent that dissolves the fluoride salt. Examples of the organic solvents include glymes such as triethylene glycol dimethyl ether (G3) and tetraethylene glycol dimethyl ether (G4); cyclic carbonates such as ethylene carbonate (EC), fluoroethylene carbonate (FEC), difluoroethylene carbonate (DFEC), propylene carbonate (PC), and butylene carbonate (BC); and linear carbonates such as dimethyl carbonate (DMC), diethyl carbonate (DEC), and ethyl methyl carbonate (EMC). In addition, an ionic liquid may be used as the organic solvent.

The separator is not particularly limited as long as it has a composition capable of withstanding the use range of the fluoride ion battery. Examples of the separator include polymer nonwoven fabrics such as polypropylene nonwoven fabrics and polyphenylene sulfide nonwoven fabrics; and microporous films of olefinic resins such as polyethylene and polypropylene.

When the fluoride ion battery of the present disclosure is a solid state battery, the fluoride ion battery of the present disclosure may have a solid electrolyte layer as an electrolyte layer. As for the solid electrolyte constituting the solid electrolyte layer, the above description regarding the negative electrode active material layer of the present disclosure can be referred to.

(Positive electrode active material layer)

The positive electrode active material layer in the present disclosure contains a positive electrode active material.

When the fluoride ion battery of the present disclosure is a liquid-based fluoride ion battery using a liquid electrolyte, the positive electrode active material layer of the fluoride ion battery of the present disclosure may comprise a positive electrode active material. In addition, when the fluoride ion battery of the present disclosure is a solid fluoride ion battery using a solid electrolyte, the positive electrode active material layer for a fluoride ion battery of the present disclosure may comprise the positive electrode active material of the present disclosure and a solid electrolyte. The positive electrode active material layer for a fluoride ion battery of the present disclosure may optionally include a binder and a conductive agent.

The positive electrode active material is an active material that is defluorinated during discharge. Examples of the positive electrode active material include element metals, alloys, metal oxides, and fluorides thereof. Examples of the metallic element contained in the positive electrode active material include Cu, Ag, Ni, Co, Pb, Ce, Mn, Au, Pt, Rh, V, Os, Ru, Fe, Cr, Bi, Nb, Sb, Ti, Sn, Zn, and the like. Among them, the positive electrode active material is preferably $PbF_2$, $FeF_3$, $CuF_2$, $BiF_3$ , or AgF.

Regarding the conductive agent, the solid electrolyte, and the binder constituting the positive electrode active material layer, reference can be made to the above description regarding the negative electrode active material layer of the present disclosure.

The content of the positive electrode active material in the positive active material electrode layer is preferably larger from the viewpoint of capacity. The ratio of the mass of the positive electrode active material to the mass of the positive electrode active material layer may be 10% by mass to 90% by mass, and is preferably 20% by mass to 80% by mass. Regarding the content of the solid electrolyte and the conductive agent in the positive active material electrode layer, the above description regarding the negative active material layer of the present disclosure can be referred to.

(Positive electrode current collector layer)

Examples of the positive electrode current collector layers include stainless steel (SUS), aluminum, nickel, iron, titanium, platinum, and carbon. Examples of the shape of the positive electrode current collector layer include a foil shape, a mesh shape, and a porous shape.

[Examples]

<Reference Example 1>

(Mixture for negative electrode active material layer)

Yttrium (Y) (made by Alfa Aeser Co.) and carbon (C) (made by Kojundo Chemical Lab Co., Ltd.) were weighed so as to have a molar composition of Y:C=0.67:0.33, and yttrium carbide ($Y_{0.67}C_{0.33}$) having a layered rock salt structure as a negative electrode active material was synthesized by an arc-melting method. Yttrium carbide synthesized as negative electrode active material was pulverized in a mortar until it could pass through a $100\mu m$ sieve.

Calcium fluoride ($CaF_2$) (Kojundo Chemical Lab Co., Ltd.) and barium fluoride ($BaF_2$) (Kojundo Chemical Lab Co., Ltd.) were mixed in a ball mill at a 600rpm for 20 hours to prepare calcium barium fluoride ($Ca_{0.5}Ba_{0.5}F_2$) as a solid-state electrolyte.

Yttrium carbide as a negative electrode active material, calcium barium fluoride as a solid electrolyte, and a vapor-grown carbon fiber (VGCF) (Showa Denko Co., Ltd.) as a conductive agent were provided so as to have a weight-ratio of 47.5 : 47.5 : 5, and mixed in a ball mill at a 100rpm for 10 hours to prepare a mixture for negative electrode active material layer.

(Material for electrolyte layer)

As the mixture for the electrolyte layer, calcium barium fluoride prepared as described above was used.

(Mixture for positive electrode active material layer)

Lead fluoride ($PbF_2$) (Kojundo Chemical Lab Co., Ltd.) and acetylene black (Denka Co., Ltd.) were weighed so as to have a weight-ratio of 95:5, and mixed in a ball mill at a 600rpm for 3 hours to prepare a mixture for positive electrode active material layer.

(Measuring XRD)

Using a Cu-K$\alpha$ source Miniflex (Rigaku Co., Ltd.), a mixture for negative electrode active material layers was measured in an argon (Ar) atmosphere. The measurement ranged from 10 degree to 80 degree, the scanning rate was 2 degree/min, and the measurement interval was 0.02 degree. The results are shown in FIG. 2. As shown in FIG. 2, it is understood that the yttrium carbide after treatment with a ball mill has a relatively large peak between 10 degree to 20 degree derived from the layered structure, and therefore has a layered structure.

(Preparation of Evaluation Battery)

A platinum (Pt) foil as a negative electrode current collector, a mixture for a negative electrode active material layer, a mixture for an electrolyte layer, a mixture for a positive electrode active material layer, and a lead (Pb) foil as a positive electrode current collector were laminated in this order, and then green compaction was performed to prepare a fluoride ion battery for evaluation.

(Charge/Discharge Evaluation)

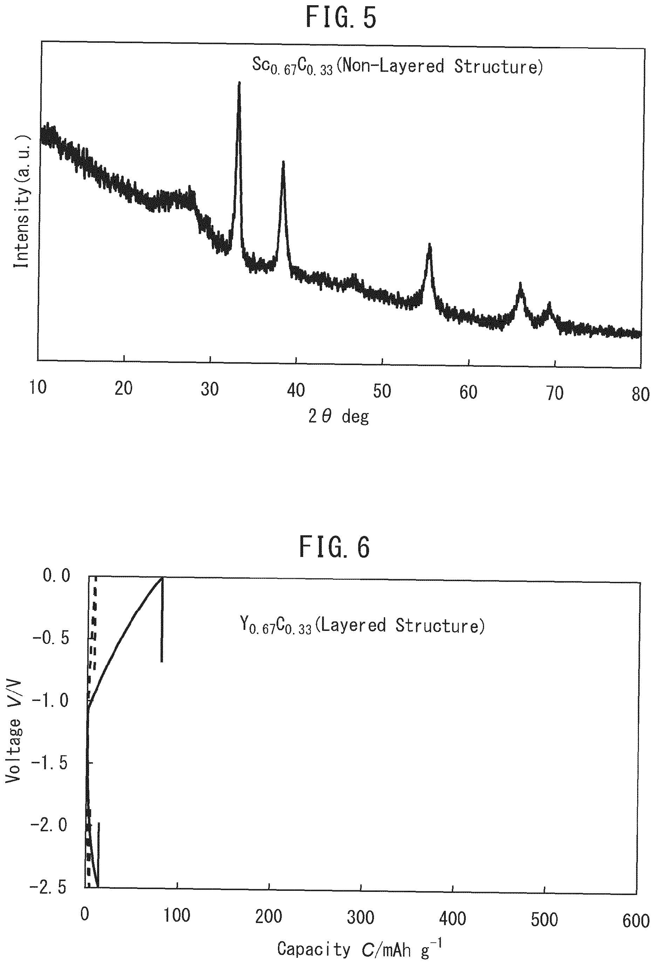

Charge/discharge tests were carried out at $50\mu A$ and 200 degree C. in 0V~-2.5V (vs Pb/PbF$_2$). The evaluation results are shown in FIG. 6. As shown in FIG. 6, no substantial charge-discharge reaction occurred in the evaluation battery of Reference Example 1.

<Example 1>

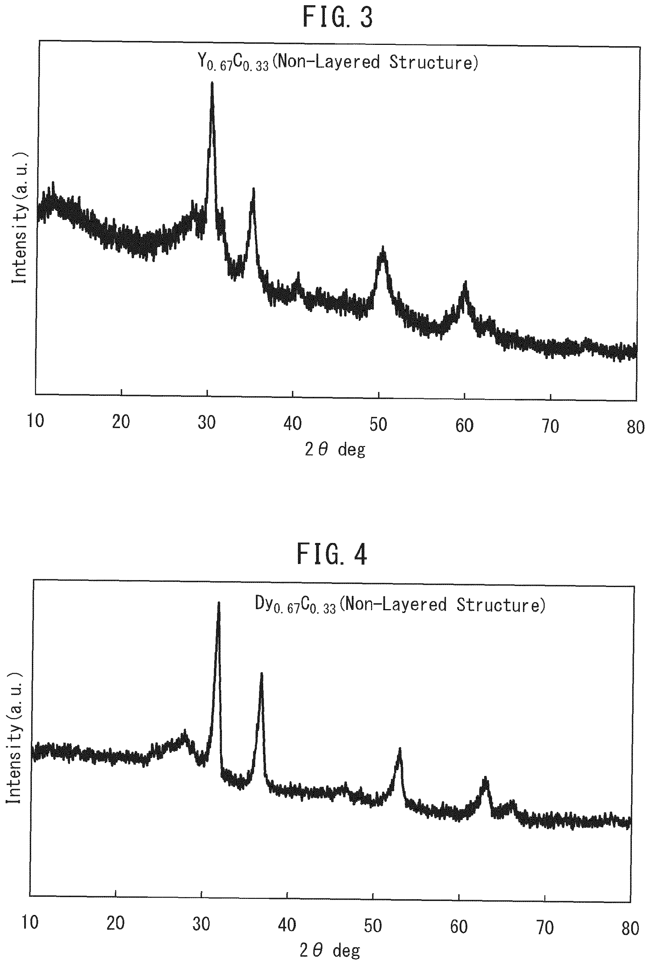

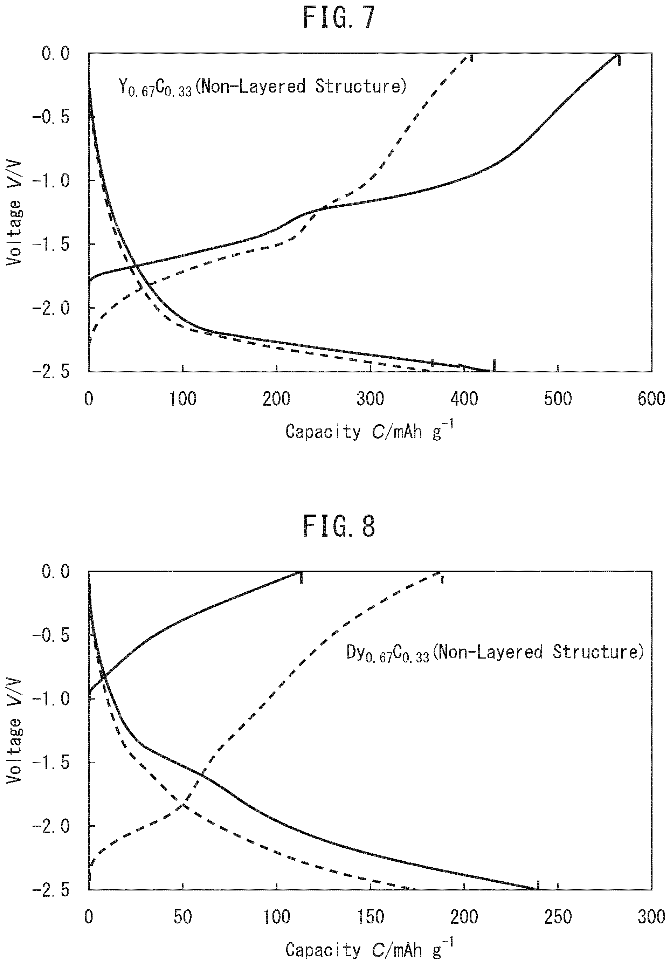

In the preparation of the mixture for the negative electrode active material layers, the fluoride-ion batteries of Example 1 were prepared and evaluated in the same manner as in Reference Example 1, except that the process with the ball mill was performed not with 100rpm but with a 200rpm for 10 hours. The evaluation results are shown in FIGS. 3 and 7.

As shown in XRD result of FIG. 3, the yttrium carbide, which is the negative electrode active material of Example 1, was converted from a layered structure to a non-layered structure by treatment with a ball mill. Further, as shown in FIG. 7, the evaluation battery of Example 1 was able to produce a good charge-discharge reaction.

<Example 2>

The fluoride ion battery of Example 2 was prepared and evaluated in the same manner as in Example 1, except that dysprosium carbide (Dy$_{0.67}$C$_{0.33}$) was used as the negative electrode active material. The evaluation results are shown in FIGS. 4 and 8.

As shown in XRD result of FIG. 4, the dysprosium carbide, which is the negative electrode active material of Example 2, had a non-layered structure. Further, as shown in FIG. 8, the evaluation battery of Example 2 was able to provide a good charge-discharge reaction.

<Example 3>

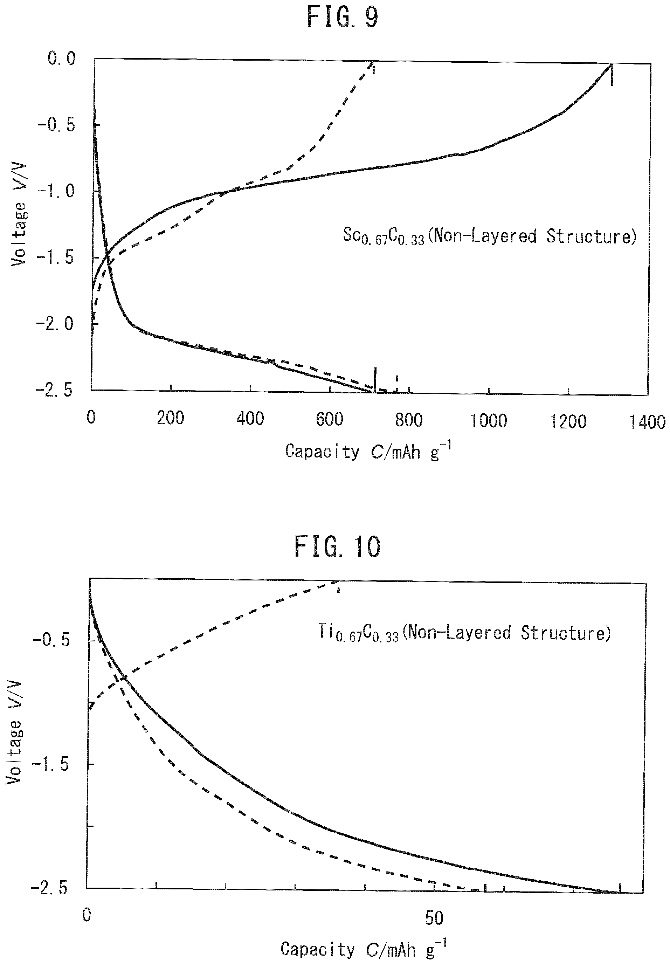

The fluoride ion battery of Example 3 was prepared and evaluated in the same manner as in Example 1, except that scandium carbide (Sc$_{0.67}$C$_{0.33}$) was used as the negative electrode active material. The evaluation results are shown in FIG. 5 and FIG. 9.

As shown in XRD result of FIG. 5, the scandium carbide, which is the negative electrode active material of Example 3, had a non-layered structure. Further, as shown in FIG. 9, the evaluation battery of Example 3 was able to produce a good charge-discharge reaction.

<Example 4>

The fluoride ion battery of Example 4 was prepared and evaluated in the same manner as in Example 1, except that titanium carbide (Ti$_{0.67}$C$_{0.33}$) was used as the negative electrode active material. The evaluation results are shown in FIG. 10.

As shown in FIG. 10, the evaluation battery of Example 4 was able to produce a good charge-discharge reaction.

(Summary of Battery and Evaluation Results)

The outline and evaluation results of the batteries of Examples and Reference Examples are shown in Table 1 below.

[Table 1]

| | Negative Electrode Active Material | | | | | Charge-Discharge Curve* 3 |
|---|---|---|---|---|---|---|
| | Composition | XRD | A* 1 | B* 2 | A/B | |
| Reference Example 1 | $Y_{0.67}C_{0.33}$ | Fig. 2 | 341 | 2453 | 0.14 (Layered Structure) | Fig. 6 (Poor) |
| Example 1 | $Y_{0.67}C_{0.33}$ | Fig. 3 | 0 | 671 | 0.00 (Non-Layered Structure) | Fig. 7 (Good) |
| Example 2 | $Dy_{0.67}C_{0.33}$ | Fig. 4 | 0 | 1222 | 0.00 (Non-Layered Structure) | Fig. 8 (Good) |
| Example 3 | $Sc_{0.67}C_{0.33}$ | Fig. 5 | 0 | 640 | 0.00 (Non-Layered Structure) | Fig. 9 (Good) |
| Example 4 | $Ti_{0.67}C_{0.33}$ | - | - | - | - (Non-Layered Structure) | Fig. 10 (Good) |
| *1: A is the maximum-peak intensity between 10 degree to 20 degree in X-ray diffraction analysis (an index of layered structure). *2: B is the maximum-peak intensity between 25 degree to 35 degree in X-ray diffraction analysis (an index of rock salt structure). *3: Solid line is the first cycle, and dotted line is the second cycle. | | | | | | |

[Explanation of Reference numerals]

1 Fluoride ion battery
10 Positive electrode current collector layer
20 Positive electrode active material layer
30 Electrolyte layer
40 Negative electrode active material layer
50 Negative electrode current collector layer

**Claims**

1. A negative electrode active material for a fluoride ion battery, comprising a transition metal carbide having a non-layered structure.

2. The negative electrode active material according to claim 1, wherein the transition metal carbide satisfies the following conditions:

$$A/B \leqq 0.05$$

where

A is the maximum peak intensity between 10 degree to 20 degree in X-ray diffraction analysis, and
B is the maximum peak intensity between 25 degree to 35 degree in X-ray diffraction analysis.

3. The negative electrode active material according to claim 1, wherein the transition metal carbide is selected from the group consisting of scandium carbide, yttrium carbide, dysprosium carbide, and titanium carbide.

4. The negative electrode active material according to claim 1, wherein the transition metal carbide is represented by the following formula:

$$MxC(1-x)$$

where

$$0.25<x<0.78.$$

5. A negative electrode active material layer for a fluoride ion battery, comprising the negative electrode active material according to any one of claims 1 to 4.

6. The negative electrode active material layer according to claim 5, comprising the negative electrode active material, a solid electrolyte, and a conductive agent.

7. A fluoride ion battery, comprising the negative electrode active material layer according to claim 5.

8. The method for producing a negative electrode active material according to any one of claims 1 to 4, comprising applying a mechanical impact to a transition metal carbide having a layered structure to convert the transition metal carbide into a transition metal carbide having a non-layered structure.

9. The method according to claim 8, wherein the transition metal carbide having the layered structure satisfies the following conditions:

$$0.05 \leqq A/B$$

where

A is the maximum peak intensity between 10 degree to 20 degree in X-ray diffraction analysis, and
B is the maximum peak intensity between 25 degree to 35 degree in X-ray diffraction analysis.

10. The method of claim 8, wherein the mechanical impact is applied by a ball mill.

# FIG. 1

# FIG. 2

$Y_{0.67}C_{0.33}$ (Layered Structure)

# FIG. 3

$Y_{0.67}C_{0.33}$ (Non-Layered Structure)

Intensity (a.u.)

$2\theta$ deg

# FIG. 4

$Dy_{0.67}C_{0.33}$ (Non-Layered Structure)

Intensity (a.u.)

$2\theta$ deg

## FIG. 5

$Sc_{0.67}C_{0.33}$(Non-Layered Structure)

## FIG. 6

$Y_{0.67}C_{0.33}$(Layered Structure)

# FIG. 7

$Y_{0.67}C_{0.33}$ (Non-Layered Structure)

# FIG. 8

$Dy_{0.67}C_{0.33}$ (Non-Layered Structure)

## FIG. 9

$Sc_{0.67}C_{0.33}$ (Non-Layered Structure)

Voltage $V$/V vs Capacity $C$/mAh g$^{-1}$

## FIG. 10

$Ti_{0.67}C_{0.33}$ (Non-Layered Structure)

Voltage $V$/V vs Capacity $C$/mAh g$^{-1}$

Europäisches
Patentamt
European
Patent Office
Office européen
des brevets

# EUROPEAN SEARCH REPORT

**Application Number**

EP 24 15 0745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 2022007<br>Thomson Scientific, London, GB;<br>AN 2021-B89325<br>XP002811626,<br>-& CN 113 479 855 A (UNIV WUHAN SCI & TECHNOLOGY) 8 October 2021 (2021-10-08)<br>* abstract * | 1-7 | INV.<br>H01M4/58<br>H01M10/054 |
| X | GAO YIN-HONG ET AL: "Non-layer transition metal carbides for energy conversion and storage",<br>CARBON, ELSEVIER OXFORD, GB,<br>vol. 183, 9 September 2021 (2021-09-09),<br>page 1013, XP086770749,<br>ISSN: 0008-6223, DOI:<br>10.1016/J.CARBON.2021.07.089<br>* abstract * | 1-7 | |
| X | US 2021/151755 A1 (WARREN SCOTT C [US] ET AL) 20 May 2021 (2021-05-20)<br>* claims 17, 19 *<br>* paragraphs [0139], [0165] * | 1-10 | |
| A | WO 2014/207521 A1 (TOYOTA MOTOR CO LTD [JP]) 31 December 2014 (2014-12-31)<br>* the whole document * | 1-10 | TECHNICAL FIELDS SEARCHED (IPC)<br><br>H01M |
| A | DATABASE WPI<br>Week 2020099<br>Thomson Scientific, London, GB;<br>AN 2020-C0344U<br>XP002811627,<br>-& JP 2020 194668 A (PANASONIC IP MANAGEMENT CO LTD)<br>3 December 2020 (2020-12-03)<br>* abstract * | 1-10 | |

-/--

The present search report has been drawn up for all claims

| Place of search | Date of completion of the search | Examiner |
|---|---|---|
| The Hague | 24 May 2024 | Tarallo, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 15 0745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 038 171 B2 (PANASONIC IP MAN CO LTD [JP]) 15 June 2021 (2021-06-15) * the whole document * ----- | 1-10 | |
| A | US 11 271 204 B2 (PANASONIC IP MAN CO LTD [JP]) 8 March 2022 (2022-03-08) * the whole document * ----- | 1-10 | |

TECHNICAL FIELDS SEARCHED (IPC)

The present search report has been drawn up for all claims

| Place of search | Date of completion of the search | Examiner |
|---|---|---|
| The Hague | 24 May 2024 | Tarallo, Anthony |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 0745

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | | Publication date | Patent family member(s) | | Publication date |
|---|---|---|---|---|---|
| CN 113479855 | A | 08-10-2021 | NONE | | |
| US 2021151755 | A1 | 20-05-2021 | NONE | | |
| WO 2014207521 | A1 | 31-12-2014 | CN | 105359315 A | 24-02-2016 |
| | | | JP | 6453532 B2 | 16-01-2019 |
| | | | JP | 2015011835 A | 19-01-2015 |
| | | | KR | 20160016898 A | 15-02-2016 |
| | | | US | 2016149217 A1 | 26-05-2016 |
| | | | WO | 2014207521 A1 | 31-12-2014 |
| JP 2020194668 | A | 03-12-2020 | NONE | | |
| US 11038171 | B2 | 15-06-2021 | CN | 110518192 A | 29-11-2019 |
| | | | EP | 3573152 A1 | 27-11-2019 |
| | | | JP | 7228776 B2 | 27-02-2023 |
| | | | JP | 2020129531 A | 27-08-2020 |
| | | | US | 2019363361 A1 | 28-11-2019 |
| US 11271204 | B2 | 08-03-2022 | CN | 112313822 A | 02-02-2021 |
| | | | EP | 3979369 A1 | 06-04-2022 |
| | | | JP | 6876997 B2 | 26-05-2021 |
| | | | JP | WO2020240890 A1 | 13-09-2021 |
| | | | US | 2020381731 A1 | 03-12-2020 |
| | | | WO | 2020240890 A1 | 03-12-2020 |

EPO FORM P0459

For more details about this annex : see Official Journal of the European Patent Office, No. 12/82

**REFERENCES CITED IN THE DESCRIPTION**

**Patent documents cited in the description**

- JP 2020534652 A
- JP 2020194697 A
- JP 2019204775 A